# FASCICULE DE BREVET EUROPEEN

(11) **EP 0 629 807 B1**
(45) Date de publication et mention de la délivrance du brevet: **07.04.1999**
(21) Numéro de dépôt: 94480050.7
(22) Date de dépôt: 31.05.1994
(51) Int. Cl.: F16L 47/00, F16L 47/02

(54) **Dispositif pour le maintien de raccords thermosoudables**
Vorrichtung zum Halten eines Heisschweissbaren Anschlusstückes
Device for retaining a heat weldable fitting

(30) Priorité: 03.06.1993 FR 9306884
(43) Date de publication de la demande: 21.12.1994
(73) Titulaire: INNOGE S.A.M., MC-98000 Monaco (MC)
(72) Inventeur: Barq, Philippe, F-06000 Nice (FR); Kervern, Jean-Philippe, F-06100 Nice (FR)
(74) Mandataire: Hammond, William

(56) Documents cités:
- EP-A- 0 088 703
- GB-A- 2 173 446
- GB-A- 2 181 203

## Description

La présente invention concerne un dispositif pour maintenir en place sur un tube, pendant une opération de soudage et pendant le refroidissement consécutif, un raccord thermosoudable qui présente la forme d'une moitié de cylindre et qui contient au moins un élément chauffant en vue de son soudage sur le tube par voie thermique.

Un exemple d'un tel raccord thermosoudable est décrit dans la demande de brevet français n° 2 692 020 déposée le 4 juin 1992 par la Demanderesse, et un raccord de ce genre sert à réparer ou à établir un branchement ou une dérivation sur un tube en matière plastique parcouru par un fluide, sans qu'il soit nécessaire de découper totalement le tube en question. Une fois que le raccord a été soudé sur le tube, un outil peut être éventuellement introduit dans le raccord depuis l'extérieur pour permettre de percer le tube, le fluide pouvant ainsi être évacué par un conduit de dérivation que comporte le raccord.

Pendant le soudage et le refroidissement, le raccord thermosoudable doit être maintenu sur le tube avec une pression à l'interface de soudage qui soit suffisante pour garantir la tenue à long terme de l'assemblage. Dans les dispositifs connus, la mise en pression est réalisée en rapprochant les deux pièces à souder au moyen d'un mécanisme à coin, à l'aide de quatre vis et de quatre écrous, ou d'un outil spécifique.

Un inconvénient de ces dispositifs connus est qu'il est difficile de les mettre en place sur les chantiers, en particulier si l'on se trouve à proximité de gaines, de câbles, de canalisations ou d'édifices enterrés, ou si l'on veut mettre en place une dérivation après tubage, le tube sur lequel le soudage doit être effectué se trouvant alors à l'intérieur d'une ancienne canalisation en fonte ou en acier.

Un but de la présente invention est de pallier cet inconvénient et de proposer un dispositif de maintien du genre spécifié plus haut qui soit facile à mettre en place d'une manière sûre.

Un autre but est de fournir un dispositif de ce genre qui permette de régler la pression de serrage du raccord thermosoudable sur le tube d'une manière simple et précise, afin d'obtenir avant le soudage une pression à l'interface de soudage qui soit optimale.

Un dispositif comportant les caractéristiques du préambule de la revendication 1 est connu du document GB-A-2 173 446.

Selon l'invention, ces buts, ainsi que d'autres qui apparaîtront par la suite, comme celui qui consiste à proposer un dispositif de maintien qui soit facile à fabriquer et peu coûteux, sont atteints grâce à un dispositif selon la revendication 1.

Pour mettre en place ce dispositif de maintien, il suffit d'accrocher les extrémités de la sangle sur le raccord thermosoudable grâce aux moyens prévus à cet effet et de serrer la sangle sur le tube en agissant sur les moyens qui permettent de rapprocher du raccord thermosoudable l'extrémité correspondante de la sangle. Pour défaire le dispositif qui peut être éventuellement réutilise, on desserre la sangle et on décroche ses moyens d'accrochage sur le raccord thermosoudable.

On comprend que la souplesse de la sangle et le faible encombrement du dispositif de maintien facilitent grandement la mise en place, ce qui était l'un des buts visés par l'invention. En particulier, dans le cas évoqué plus haut de la mise en place d'une dérivation après un tubage, il suffit de découper la partie supérieure de l'ancienne canalisation, le passage de la partie souple du dispositif de maintien étant beaucoup plus aisé qu'avec les éléments rigides de la technique antérieure, le recours à un outil simple comme un crochet facilitant encore la mise en oeuvre du dispositif.

Dans une forme de réalisation avantageuse, les bords libres du raccord thermosoudable se prolongent vers l'extérieur par des pattes d'accrochage longitudinales qui constituent des organes d'ancrage appropriés pour les moyens d'accrochage de la sangle.

Si ces pattes sont pourvues chacune d'une rainure qui s'ouvre à l'opposé de la sangle lorsque celle-ci est installée, et si l'un au moins des moyens d'accrochage de la sangle comprend une boucle qui présente une ouverture centrale de forme sensiblement rectangulaire et dont l'extrémité correspondante de la sangle est rendue solidaire, le bord de l'ouverture de cette boucle qui est opposé à la sangle peut pénétrer dans la rainure longitudinale de la patte correspondante du raccord thermosoudable, ce qui retient la boucle en place d'une manière simple et efficace.

En ce qui concerne maintenant les moyens permettant de modifier la distance entre le raccord thermosoudable et l'extrémité correspondante de la sangle, ils peuvent être réalisés grâce au fait que l'un au moins des moyens d'accrochage comprend une attache en deux parties dont une partie est une traverse solidaire de l'extrémité correspondante de la sangle et dont l'autre partie est un étrier d'accrochage sur la patte longitudinale associée du raccord thermosoudable, les deux parties de cette attache étant reliées entre elles par des boulons, c'est-à-dire des organes de liaison de longueur réglable.

En agissant sur la longueur de ces organes de liaison, on peut déplacer dans un sens ou dans l'autre une extrémité de la sangle par rapport au raccord thermosoudable, de sorte que tout se passe comme si l'on avait affaire à une sangle de longueur réglable. Les organes de liaison en question étant constitués par des boulons qui traversent les extrémités en regard des deux parties de l'attache et qui enserrent celle-ci entre leur tête et leur écrou, le vissage de ces boulons serre la sangle contre le tube, et donc ce dernier contre le raccord thermosoudable, tandis que leur dévissage dégage la sangle du tube. Comme ce réglage est continu, il est ainsi possible de serrer tout d'abord légèrement le raccord à souder, ce qui permet de l'orienter et de réaliser l'ensemble des montages annexes, avant d'effectuer le serrage final du raccord et son soudage. Par ailleurs, si la position de vissage à fond des boulons correspond sensiblement à la pression de serrage optimale du dispositif, le montage s'en trouve grandement facilité et raccourci, puisque la personne chargée de l'opération n'a pas besoin d'attention particulière pour mettre en place le raccord avec la pression de serrage qui est la meilleure.

Que le moyen d'accrochage soit constitué par une boucle ou par une attache en deux parties, son maintien en place sur la patte correspondante du raccord thermosoudable est facilité s'il comporte sur son bord d'accrochage au moins un ergot de positionnement qui coopère avec un logement conjugué ménagé dans la patte en question.

Dans certains cas, il est possible de ramener l'attache spécifiée plus haut à une simple traverse qui est solidaire de l'extrémité correspondante de la sangle et qui est reliée par des boulons à la patte d'accrochage associée du raccord thermosoudable. Le montage est un peu plus compliqué ici, puisqu'au lieu d'accrocher simplement une attache pourvue d'une ouverture centrale sur une patte du raccord thermosoudable, il faut passer deux boulons dans des perçages correspondants de la patte et de la traverse et visser un écrou sur leur extrémité filetée, mais cette solution peut être avantageuse dans certaines circonstances.

La description qui va suivre, et qui ne présente aucun caractère limitatif, permettra de bien comprendre comment la présente invention peut être mise en pratique. Elle doit être lue en regard des dessins annexés, parmi lesquels :
La figure 1 montre un raccord thermosoudable qui est destiné à être utilisé avec le dispositif de maintien selon l'invention, ce dernier étant simplement indiqué d'une manière schématique, cependant que les parties de droite et de gauche de la figure représentent, respectivement, une vue en coupe transversale et une vue de bout du raccord ; et :
La figure 2 montre une vue en perspective du dispositif de maintien selon l'invention.

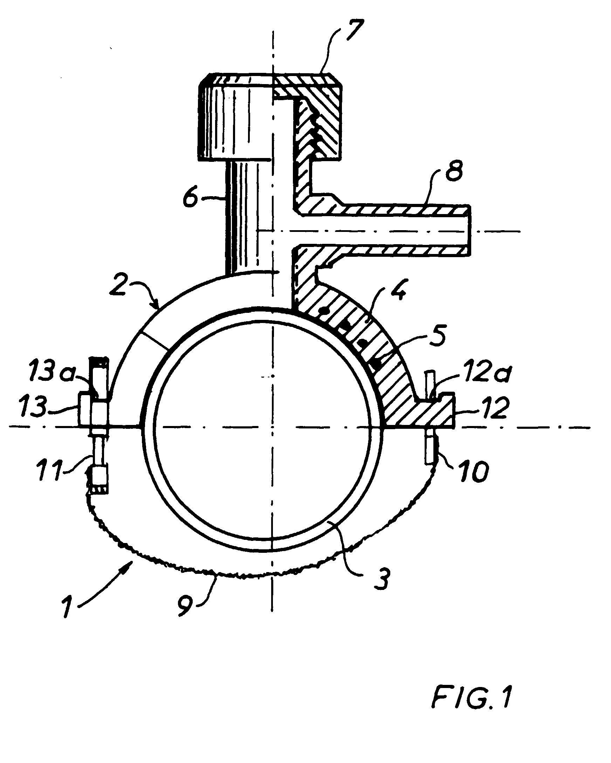

Dans tout ce qui va suivre, on supposera que ce dispositif se trouve dans sa position d'utilisation représentée sur la figure 1, ce qui donne tout leur sens à des expressions comme "supérieur" ou "inférieur". D'autre part, on appellera "longitudinale" toute direction parallèle à l'axe du tube sur lequel doit être monté le dispositif de maintien selon l'invention.

Ce dispositif de maintien est désigné dans son ensemble par le repère 1 sur les figures, et il est utilisé en coopération avec un raccord thermosoudable 2 que l'on voit uniquement sur la figure 1 et qui est destiné à être soudé sur un tube 3.

Le raccord 2 est d'une construction connue, et il comprend un corps 4 dont la forme générale est celle d'un demi-cylindre, la surface intérieure de celui-ci épousant étroitement la paroi extérieure du tube 3. Le corps 4 et le tube 3 sont constitués par la même matière plastique thermosoudable, ou par des matières plastiques qui sont différentes, mais compatibles entre elles, de sorte qu'un chauffage au moyen de résistances 5 noyées dans le corps 4 au voisinage du tube 3 fait fondre la matière plastique dans la région de la surface de contact entre ce corps 4 et ce tube 3, ce qui assure la liaison étanche entre ces deux pièces après leur refroidissement. Cette technique est notamment décrite dans la demande de brevet français précitée, et il n'est donc pas nécessaire de l'exposer ici d'une manière plus détaillée.

On se contentera de noter à titre de simple information que le corps 4 du raccord thermosoudable 2 peut comporter en outre un prolongement radial 6 en forme de manchon s'étendant vers le haut qui sert au passage d'un outil destiné à percer la paroi du tube 3 et qui peut être fermé par un bouchon fileté 7. D'autre part, le prolongement 6 peut être pourvu d'un conduit de déviation 8 qui s'étend perpendiculairement à lui et qui permet l'évacuation du fluide contenu dans le tube 3.

Lors du soudage thermique du raccord 2 sur le tube 3, et jusqu'à la fin du refroidissement consécutif, il est nécessaire de maintenir ces deux pièces appliquées étroitement l'une contre l'autre, et c'est ici qu'intervient le dispositif selon l'invention.

Comme on le voit sur la figure 1, ce dernier comprend une sangle 9 qui est réalisée en une matière souple tissée ou non tissée, dont une extrémité est fixée à une boucle 10 et dont l'extrémité opposée est solidaire d'une attache 11, la liaison entre la sangle 9 et la boucle 10 ou l'attache 11, respectivement, étant réalisée par tout moyen convenable, et par exemple par vissage, par collage, par sertissage, par couture ou par rivetage.

La boucle 10 et l'attache 11 sont destinées à être accrochées respectivement à des pattes longitudinales 12 et 13 qui prolongent vers l'extérieur, d'un seul tenant et sur toute leur longueur, les bords libres du corps 4 du raccord thermosoudable 2. C'est également sur toute leur longueur que les pattes 12 et 13 sont pourvues chacune sur leur face supérieure d'une rainure 12a ou 13a, respectivement.

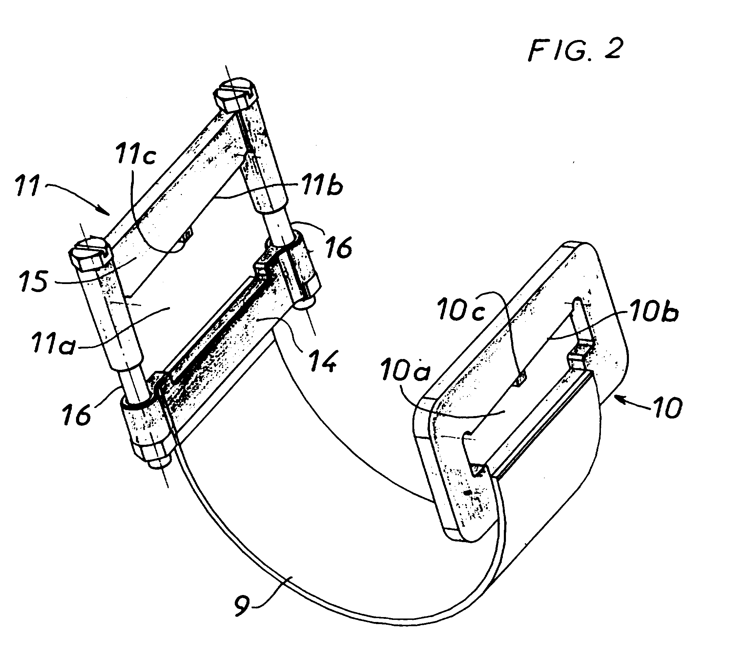

Ainsi que cela est représenté sur la figure 2, la boucle 10 présente une ouverture centrale sensiblement rectangulaire 10a, et le bord 10b de celle-ci qui est opposé à la sangle 9 pénètre dans la rainure 12a de la patte 12 pour accrocher la boucle 10 au raccord thermosoudable 2. Un ergot 10c fait saillie depuis le bord 10b de la boucle 10 en étant dirigé vers le bord opposé de l'ouverture 10a, et, lors de l'accrochage de la boucle 10 sur la patte 12, il vient s'enfoncer dans un logement conjugué non représenté qui est ménagé au fond de la rainure 12a de la patte 12, ceci contribuant au positionnement de la boucle 10 sur le raccord thermosoudable 2.

Pour sa part, l'attache 11 est réalisée en deux parties, à savoir une traverse 14 à l'extrémité inférieure de laquelle la sangle 9 est fixée de la même manière que la boucle 10 et un étrier 15 dont les branches sont dirigées vers la traverse 14. A chaque extrémité dans le sens longitudinal, les deux parties 14 et 15 de l'attache 11 sont reliées entre elles par un boulon 16 qui traverse des perçages verticaux en regard ménagés respectivement dans les extrémités de la traverse 14 et dans les branches de l'étrier 15. La tête de ce boulon 16 s'appuie sur la face supérieure de l'étrier 15 et son écrou porte sur la face inférieure de la traverse 14. L'espace libre ménagé entre la traverse 14, l'étrier 15 et les boulons 16 forme ainsi dans l'attache 11 une ouverture 11a qui est analogue à l'ouverture 10a de la boucle 10 et dont le bord supérieur 11b vient s'accrocher dans la rainure 13a de la patte 13 du raccord thermosoudable 2, ce bord 11b présentant, là aussi, un ergot 11c de positionnement qui coopère avec un logement correspondant de la rainure 13a.

Lorsque l'on serre ou desserre les boulons 16, on fait varier la hauteur de l'attache 11, et ceci modifie la longueur totale du dispositif de maintien entre les points d'accrochage de ses extrémités sur le corps 4 du raccord thermosoudable 2, lesquels sont constitués par les bords respectifs 10a et 11a de la boucle 10 et de l'attache 11. Tout se passe donc comme si l'on faisait varier la longueur de la sangle 9, bien que celle-ci ne subisse en fait aucune modification.

De préférence, on choisit la géométrie du système d'une manière telle que la pression à l'interface entre le raccord thermosoudable 2 et le tube 3 soit optimale lorsque les boulons 16 sont vissés à fond, ce qui facilite le réglage de cette pression.

Il va de soi que, sans sortir du cadre de la présente invention, il serait possible d'apporter de nombreuses modifications à la forme de réalisation qui vient d'être décrite. C'est ainsi par exemple que l'étrier 15 pourrait être supprimé, les boulons 16 passant alors à travers des perçages ménagés directement dans la patte correspondante 13 du corps 4 du raccord thermosoudable 2.

## Revendications

1. Dispositif notamment pour maintenir en place sur un tube, pendant une opération de soudage et pendant le refroidissement consécutif, un raccord thermosoudable (2) comprenant une sangle (9) qui est réalisée en une matière souple et qui est pourvue à chacune de ses extrémités d'un moyen d'accrochage (10, 11) dont l'un est constitué par une attache (11) en deux parties reliées entre elles par des organes de liaison, l'une d'elles étant une traverse (14) solidaire de l'extrémité correspondante de ladite sangle (9), caractérisé par le fait que l'autre partie est constituée par une traverse d'accrochage (15) et que les organes de liaison sont constitués par des boulons (16) qui traversent les extrémités en regard des deux traverses (14, 15).

2. Dispositif selon la revendication 1, caractérisé par le fait que la position de vissage à fond desdits boulons (16) correspond sensiblement à la pression de serrage optimal du dispositif.

3. Dispositif selon la revendication 1, caractérisé par le fait que l'un au moins desdits moyens d'accrochage (10, 11) comporte au moins un ergot de positionnement (10c, 11c) coopérant avec un logement conjugué qui est ménagé dans la patte d'accrochage correspondante (12, 13).

4. Dispositif selon l'une quelconque des revendications 1 à 3, caractérisé par le fait que l'un au moins desdits moyens d'accrochage comprend une boucle (10) qui présente une ouverture centrale (10a) de forme sensiblement rectangulaire et dont l'extrémité correspondante de ladite sangle (9) est rendue solidaire.

## Patentansprüche

1. Vorrichtung, um insbesondere ein heißschweißbares Anschlußstück (2) während eines Schweißvorgangs und während der darauffolgenden Abkühlung lagegenau auf einem Rohr zu halten, bestehend aus einem Band (9) aus einem schmiegsamen Material, das an jedem seiner Enden mit einem Einhakmittel (10, 11) versehen ist, von denen das eine von einer aus zwei durch Verbindungselemente miteinander verbundenen Teilen bestehenden Klammer (11) gebildet ist, von denen der eine Teil eine mit dem entsprechenden Ende des Bandes (9) fest verbundene Traverse (14) ist, dadurch gekennzeichnet, daß der andere Teil von einer Einhak-Traverse (15) gebildet ist und daß es sich bei den Verbindungselementen um Schraubenbolzen (16) handelt, die durch die sich gegenüberliegenden Enden der beiden Traversen (14, 15) hindurchgesteckt sind.

2. Vorrichtung nach Anspruch 1, dadurch gekennzeichnet, daß die Position der fest angezogenen Schraubenbolzen (16) annähernd dem optimalen Anpreßdruck der Vorrichtung entspricht.

3. Vorrichtung nach Anspruch 1, dadurch gekennzeichnet, daß wenigstens eines der Einhakmittel (10, 11) wenigstens einen Dorn (10c, 11c) zum Positionieren aufweist, der mit einer dafür vorgesehenen, in der entsprechenden Einhakklaue (12, 13) ausgebildeten Aufnahme zusammenwirkt.

4. Vorrichtung nach einem der Ansprüche 1 bis 3, dadurch gekennzeichnet, daß wenigstens eines der Einhakmittel von einer Art Schnalle (10) mit einer mittigen Öffnung (10a) in einer annähernd rechteckigen Form gebildet ist, mit der das entsprechende Ende des Bandes (9) fest verbunden ist.

## Claims

1. Device especially for holding a heat-weldable fitting (2) in place on a pipe during a welding operation and during the cooling which follows, this fitting comprising a strap (9) which is made of a flexible material and which is provided at each of its ends with a fastening means (10, 11), one of which consists of a fastener (11) made in two parts joined together by connecting members, one of these parts being a cross-piece (14) integral with the corresponding end of the said strap (9), characterized in that the other part consists of a fastening cross-piece (15) and in that the connecting members consist of bolts (16) which pass through the facing ends of the two cross-pieces (14, 15).

2. Device according to Claim 1, characterized in that the position in which the said bolts (16) are screwed tight corresponds substantially to the optimum clamping pressure of the device.

3. Device according to Claim 1, characterized in that at least one of the said fastening means (10, 11) includes at least one positioning stud (10c, 11c) engaging with a conjugate housing which is made in the corresponding fastening lug (12, 13).

4. Device according to any one of Claims 1 to 3, characterized in that at least one of the said fastening means comprises a loop (10) which has a central opening (10a) of approximately rectangular shape and to which the corresponding end of the said strap (9) is firmly attached.
